# EUROPÄISCHE PATENTSCHRIFT

(11) **EP 0 414 055 B1**
(45) Veröffentlichungstag und Bekanntmachung des Hinweises auf die Patenterteilung: **11.10.1995**
(21) Anmeldenummer: 90115294.2
(22) Anmeldetag: 09.08.1990
(51) Int. Cl.: C08G 75/02

(54) **Säuremodifizierte Polyarylensulfide**
Acid modified polyarylenesulfides
Polyarylène sulfures modifiés par des acides

(30) Priorität: 22.08.1989 DE 3927658
(43) Veröffentlichungstag der Anmeldung: 27.02.1991
(73) Patentinhaber: BAYER AG, 51368 Leverkusen (DE)
(72) Erfinder: Köhler, Burkhard, Dr., D-4150 Krefeld (DE); Heinz, Hans-Detlef, Dr., D-4150 Krefeld (DE); Reinking, Klaus, Dr., D-5632 Wermelskirchen (DE)

(56) Entgegenhaltungen:
- EP-A- 0 053 344
- EP-A- 0 164 638
- EP-A- 0 164 639
- EP-A- 0 193 951
- EP-A- 0 345 550
- DE-A- 3 826 657

## Beschreibung

Die Erfindung betrifft Polyarylensulfide (PAS), vorzugsweise Polyphenylensulfide (PPS), die mit Carboxylgruppen oder Dicarbonsäureanhydridgruppen modifiziert sind.

Polyarylensulfide mit funktionellen Gruppen sind bekannt [z.B. US-A 3 354 129, Interne J. Polymeric Mater. 11 (87) 263]. Weiterhin sind Phenylensulfid-Polymere, bzw. -Oligomere mit funktionellen Endgruppen wie Carboxyl, Nitril etc. (Telechele) bekannt [z.B. Polymer Bulletin 4 (81) 459, Fr-A 24 70 780, DE-A 34 21 608, DE-A 34 21 610)].

Die bekannten, mit funktionellen Gruppen modifizierten Polyarylensulfide sind z. T. schwer herstellbar, da ein Monomerbaustein mit funktioneller Gruppe direkt in die Synthese des Polymeren eingesetzt werden muß. Solche Comonomere können die Synthese erschweren, während der Reaktion unerwünschte Nebenreaktionen verursachen oder wegen nicht vollständigen Einbaus in die Polymerkette die Kreisläufe und Abwässer des Herstellungsprozesses verunreinigen. Daher sind Verfahren von Interesse, die eine nachträgliche Polymermodifizierung erlauben.

Gegenstand der Erfindung sind die Reaktionsprodukte, die durch Mischen von 99,9 bis 80 Gew.-%, vorzugsweise 99,3 bis 95 Gew.-%, Polyarylensulfiden, vorzugsweise Polyphenylensulfid, die durch Umsetzung von
a) einem oder mehreren Dihalogenaromaten der Formeln (I), (II) und/oder (III) 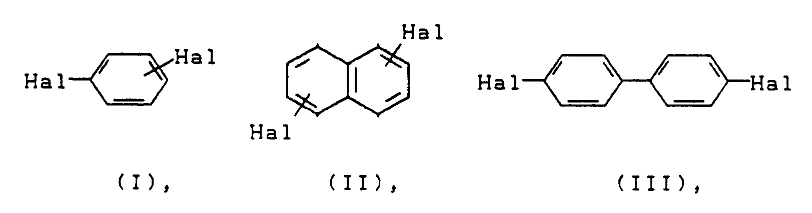 wobei Hal für Fluor, Chlor oder Brom, vorzugsweise für Chlor, steht,
b) 0 - 5 Mol-%, bezogen auf die Summe der Dihalogenaromaten a) eines Tri- oder Tetrahalogenaromaten der Formel (IV)

   Ar¹Halₙ (IV),

   wobei Ar¹ für einen aromatischen C₆-C₁₄-Rest und Hal für Fluor, Chlor oder Brom, vorzugsweise für Chlor, steht und
c) einem oder mehreren Schwefelspendern der Formel (V)

   M₂S (V),

   wobei M für Natrium oder Kalium steht und das Verhältnis (a + b) : c im Bereich von 0,75 : 1 bis 1,15 : 1 liegt;
d) in einem organischen Lösungsmittel, vorzugsweise in N-Methylpyrrolidon oder N-Methylcaprolactam, gegebenenfalls unter Mitverwendung eines Katalysators, vorzugsweise Caprolactam, Alkalicarboxylaten und/oder den Alkalisalzen der 6-Amino- oder 6-Methylaminocapronsäure, wobei das molare Verhältnis c : d im Bereich von 1 : 2 bis 1 : 15 liegt,
hergestellt werden
mit 0,1 bis 20 Gew.-%, vorzugsweise von 0,7 - 5 Gew.-%, von Carboxylgruppen- oder Dicarbonsäureanhydridgruppenhaltigen Aromaten der Formeln (VI), (VII), (VIII) oder (IX), vorzugsweise der Formeln (VI) oder (VIII), wobei 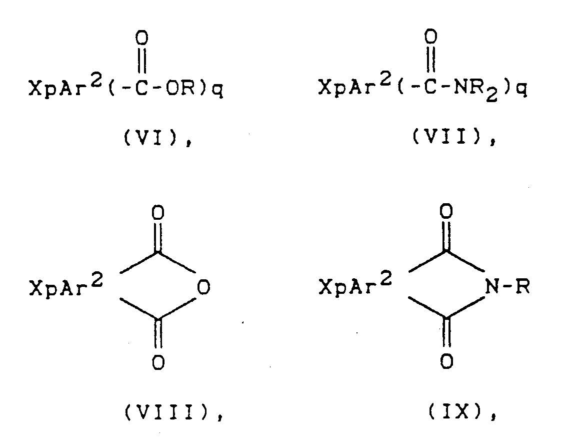
- R: für ein Wasserstoffatom, einen C₁-C₁₂-Alkylrest, einen C₆-C₁₄-Arylrest oder einen C₇-C₁₂-Arylalkylrest, vorzugsweise für Wasserstoff, steht,
- Ar²: für einen aromatischen C₆-C₂₀-Rest steht,
- p: 1, 2 oder 3, vorzugsweise 1, bedeutet,
- q: 1, 2 oder 3, vorzugsweise 1 oder 2, bedeutet,
- X: für eine Nitrogruppe oder eine Sulfonsäuregruppe oder eine Alkalisulfonatgruppe steht,
wobei 3,5-Dinitrobenzoesäure, 3,5-Dinitrobenzoesäure (C₂-C₁₂-Alkylester), 3,4-Dinitrobenzoesäure, 3,4-Dinitrobenzoesäuremethylester, 3,5-Dinitrobenzoesäureamid, 3,5-Dinitrobenzoesäurediethylamid und 3,4-Dinitrobenzamid ausgenommen sind vorzugsweise unter Scherung bei Temperaturen vom Schmelzpunkt des Polyarylensulfids bis 450°C entstehen.

Die Umsetzung kann in (Schneckenwellen) Extrudern oder Knetern vorgenommen werden.

Beispiele für erfindungsgemäße Stoffe der Formel (VI) sind 2-, 3- und 4-Nitrobenzoesäure, 5-Nitro-isophthalsäure, 2-, 3- und 4-Sulfobenzoesäure, 5-Sulfoisophthalsäure.

Beispiele für erfindungsgemäße Stoffe der Formel (VIII) sind 3- und 4-Sulfo-phthalsäureanhydrid, 3- und 4-Nitrophthalsäureanhydrid, 4-Sulfonaphthalin-1,8-dicarbonsäureanhydrid, 4-Nitro-naphthalin-1,8-dicarbonsäureanhydrid.

Die Polyarylensulfide für die Komponente a) sind bekannt (z.B. US-A 3 354 129, EP-A 171 021) und handelsüblich, z.B. Ryton®, Tedur®.

Thermoplastische Mischungen, enthaltend die erfindungsgemäß modifizierten Polyarylensulfide, können zur Herstellung geformter Körper verwendet werden.

Die erfindungsgemäßen Reaktionsprodukte eignen sich besonders für Polyarylensulfidmischungen, die mindestens 2 Gew.-% basische Füllstoffe, z.B. CaO, CaCO₃, MgCO₃, LiCO₃, Na₂CO₃, K₂CO₃ oder Dolomit, enthalten können. Sie eignen sich als Legierungspartner für andere Thermoplasten und andere Polyarylensulfide, vorzugsweise Polyphenylensulfid.

### Beispiele

### Beispiel 1

Man extrudiert auf einem Doppelwellenextruder ZSK 32 von Werner und Pfleiderer bei 320°C eine Mischung aus 99 Gew.-% eines Polyparaphenylensulfids PPS der Schmelzviskosität 40 Pas (306°C, 1.000 l/s) und 1 Gew.-% 3-Sulfobenzoesäure.

### Beispiele 2

Man extrudiert auf einem Doppelwellenextruder ZSK 32 von Werner und Pfleiderer bei 320°C eine Mischung aus 95 Gew.-% PPS und 5 Gew.-% 3-Sulfobenzoesäure.

### Beispiel 3

Man extrudiert 98 Gew.-% PPS mit 2 Gew.-% 4-Sulfophthalsäure.

### Beispiel 4

Man extrudiert 98 Gew.-% PPS mit 2 Gew.-% 4-Sulfonaphthalin-1,8-dicarbonsäureanhydrid.

### Beispiel 5

Man extrudiert 98 Gew.-% PPS mit 2 Gew.-% 4-Nitro-naphthalin-1,8-dicarbonsäureanhydrid.

Aus den Reaktionsprodukten der Beispiele 1 - 5 können mit Dioxan höchstens 5 Gew.-% der eingesetzten Säure- oder Säureanhydridmengen extrahiert werden.

## Patentansprüche

1. Reaktionsprodukte, die durch Mischen von 99,9 bis 80 Gew.-% Polyarylensulfiden, die durch Umsetzung von
a) einem oder mehreren Dihalogenaromaten der Formeln (I), (II) und/oder (III) 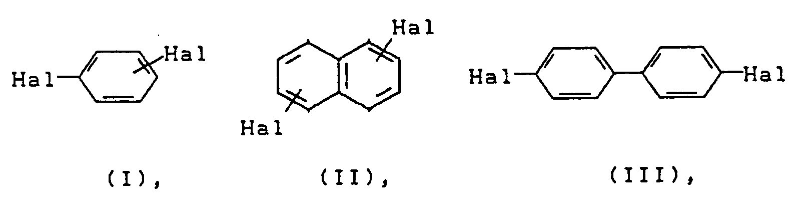 wobei Hal für Fluor, Chlor oder Brom, steht,
b) 0 - 5 Mol-%, bezogen auf die Summe der Dihalogenaromaten a) eines Tri- oder Tetrahalogenaromaten der Formel (IV)
Ar¹Halₙ (IV),
wobei Ar¹ für einen aromatischen C₆-C₁₄-Rest und Hal für Fluor, Chlor oder Brom, steht und
c) einem oder mehreren Schwefelspendern der Formel (V)
M₂S (V)
wobei M für Natrium oder Kalium steht und das Verhältnis (a + b) : c im Bereich von 0,75 : 1 bis 1,15 : 1 liegt;
d) in einem organischen Lösungsmittel, gegebenenfalls unter Mitverwendung eines Katalysators, Alkalicarboxylaten und/oder den Alkalisalzen der 6-Amino- oder 6-Methylaminocapronsäure, wobei das molare Verhältnis c : d im Bereich von 1 : 2 bis 1 : 15 liegt,
hergestellt werden
mit 0,1 bis 20 Gew.-% von Carboxylgruppen- oder Dicarbonsaureanhydridgruppen-haltigen Aromaten der Formeln (VI), (VII), (VIII) oder (IX), 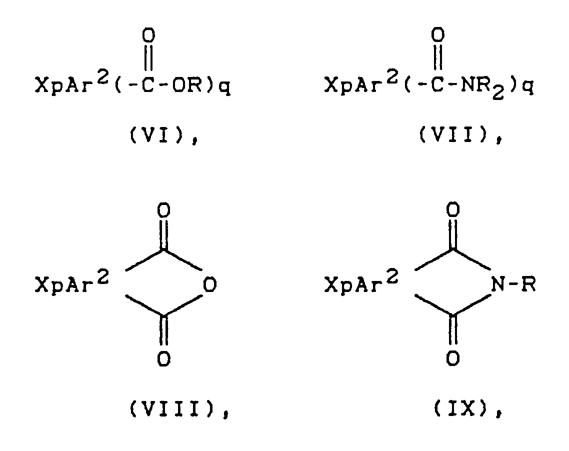 wobei
R für ein Wasserstoffatom, einen C₁-C₁₂-Alkylrest, einen C₆-C₁₄-Arylrest oder einen C₇-C₁₂-Arylalkylrest steht,
Ar² für einen aromatischen C₆-C₂₀-Rest steht,
p 1, 2 oder 3 bedeutet,
q 1, 2 oder 3 bedeutet,
X für eine Nitrogruppe oder eine Sulfonsäuregruppe oder eine Alkalisulfonatgruppe steht,
wobei 3,5-Dinitrobenzoesäure, 3,5-Dinitrobenzoesäure (C₂-C₁₂-Alkylester), 3,4-Dinitrobenzoesäure, 3,4-Dinitrobenzoesäuremethylester, 3,5-Dinitrobenzoesäureamid, 3,5-Dinitrobenzoesäurediethylamid und 3,4-Dinitrobenzamid ausgenommen sind bei Temperaturen vom Schmelzpunkt des Polyarylensulfids bis 450°C entstehen.

2. Reaktionsprodukte nach Anspruch 1, dadurch gekennzeichnet, daß als Verbindungen der Formeln (VI) und/oder (VIII) solche Verbindungen eingesetzt werden, bei denen für X eine Sulfonsäuregruppe steht.

3. Reaktionsprodukte nach Anspruch 1, dadurch gekennzeichnet, daß als Verbindungen der Formel (VI) und/oder (VIII) solche Verbindungen eingesetzt werden, bei denen für X eine Nitrogruppe steht.

4. Verwendung von Produkten des Anspruchs 1 zur Herstellung einer Polyarylensulfidmischung.

5. Verwendung von Produkten des Anspruchs 1 zur Herstellung geformter Körper.

6. Mischungen aus den Reaktionsprodukten nach Anspruch 1, mit üblichen Verstärkungs- und Füllstoffen, dadurch gekennzeichnet, daß mindestens 2 Gew.-% der Füllstoffe zur Gruppe der basischen Füllstoffe CaO, CaCO₃, MgCO₃, Li₂CO₃, Na₂CO₃, K₂CO₃ oder Dolomit gehören.

7. Verwendung der Reaktionsprodukte nach Anspruch 1 als Legierungspartner für andere Thermoplasten.

## Claims

1. Reaction products obtained by mixing 99.9 to 80 wt.% of polyarylene sulphides which are produced by reacting
a) one or more dihalogenated aromatic compounds of the formulae (I), (II) and/or (III) 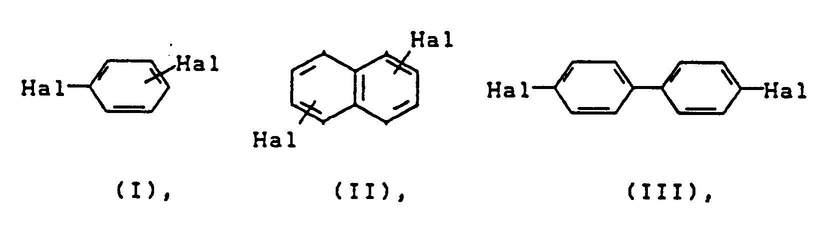 wherein Hal denotes fluorine, chlorine or bromine,
b) 0 to 5 mol.%, relative to the sum of the dihalogenated aromatic compounds a) of a tri- or tetrahalogenated aromatic compound of the formula (IV)
Ar¹Halₙ (IV),
wherein Ar¹ denotes an aromatic C₆-C₁₄ residue and Hal denotes fluorine, chlorine or bromine and
c) one or more sulphur donors of the formula (V)
M₂S (V)
wherein M denotes sodium or potassium and the ratio (a + b):c is in the range from 0.75:1 to 1.15:1;
d) in an organic solvent, optionally with the addition of a catalyst, alkali metal carboxylates and/or the alkali metal salts of 6-amino- or 6-methylaminocaproic acid, wherein the molar ratio of c:d is in the range from 1:2 to 1:15,
with 0.1 to 20 wt.% of aromatic compounds containing carboxyl groups or dicarboxylic acid anhydride groups and of the formulae (VI), (VII), (VIII) or (IX), 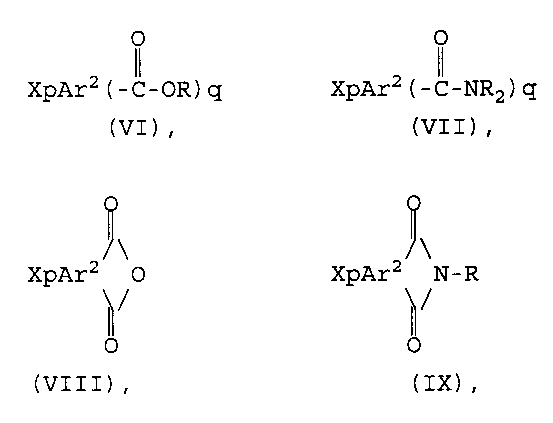 wherein
R denotes a hydrogen atom, a C₁-C₁₂ alkyl residue, a C₆-C₁₄ aryl residue or a C₇-C₁₂ arylalkyl residue,
Ar² denotes an aromatic C₆-C₂₀ residue,
p means 1, 2 or 3,
q means 1, 2 or 3,
X denotes a nitro group or a sulphonic acid group or an alkali metal sulphonate group,
wherein 3,5-dinitrobenzoic acid, 3,4-dinitrobenzoic acid (C₂-C₁₂ alkyl esters), 3,4-dinitrobenzoic acid, 3,4-dinitrobenzoic acid methyl ester, 3,5-dinitrobenzoic acid amide, 3,4-dinitrobenzoic acid diethylamide and 3,4-dinitrobenzamide are excepted
at temperatures from the melting point of the polyarylene sulphide to 450°C.

2. Reaction products according to claim 1, characterised in that the compounds of the formulae (VI) and/or (VIII) used are those in which X denotes a sulphonic acid group.

3. Reaction products according to claim 1, characterised in that the compounds of the formulae (VI) and/or (VIII) used are those in which X denotes a nitro group.

4. Use of the products of claim 1 for the production of a polyarylene sulphide mixture.

5. Use of the products of claim 1 for the production of shaped articles.

6. Mixtures of the reaction products according to claim 1 with customary reinforcing materials and fillers, characterised in that at least 2 wt.% of the fillers belong to the group of basic fillers CaO, CaCO₃, MgCO₃, Li₂CO₃, Na₂CO₃, K₂CO₃ or dolomite.

7. Use of the reaction products according to claim 1 as blend components for other thermoplastics.

## Revendications

1. Produits de la réaction formée par mélange de 99,9 à 80 % en poids de sulfures de polyarylène eux-mêmes obtenus par réaction de
a) un ou plusieurs composés dihalogénoaromatiques de formules I, II et/ou III 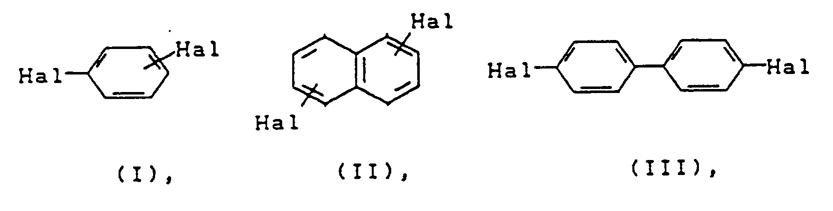 dans lesquelles Hal représente le fluor, le chlore ou le brome,
b) 0 à 5 mol%, par rapport à la somme des composés dihalogénoaromatiques a), d'un composé tri- ou tétrahalogénoaromatique de formule IV
Ar¹Halₙ (IV),
dans laquelle Ar¹ représente un radical aromatique en C₆-C₁₄ et Hal représente le fluor, le chlore ou le brome et
c) un ou plusieurs fournisseurs de soufre de formule V
M₂S (V)
dans laquelle M représente le sodium ou le potassium et le rapport (a + b) : c se situe dans l'intervalle de 0,75 : 1 à 1,15 : 1;
d) dans un solvant organique, éventuellement avec utilisation conjointe d'un catalyseur, des carboxylates alcalins et/ou les sels alcalins de l'acide 6-amino- ou 6-méthylaminocaproïque, le rapport molaire c : d se situant dans l'intervalle de 1 : 2 à 1 : 15,
avec 0,1 à 20 % en poids de composés aromatiques contenant des groupes carboxyle ou des groupes anhydrides d'acide dicarboxylique, de formules VI, VII, VIII ou IX 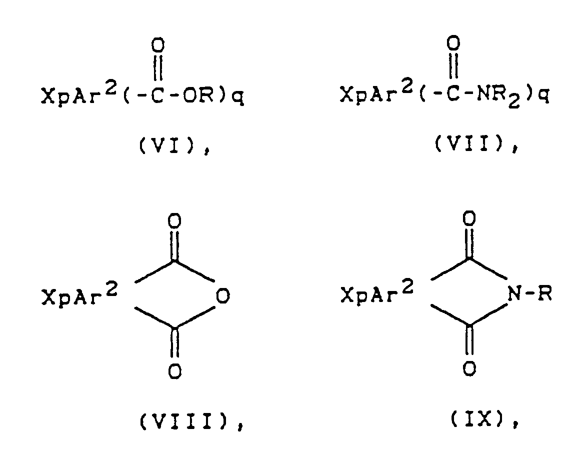 dans lesquelles
R représente un atome d'hydrogène, un groupe alkyle en C₁-C₁₂, aryle en C₆-C₁₄ ou arylalkyle en C₇-C₁₂,
Ar² représente un radical aromatique en C₆-C₂₀,
p est égal à 1, 2 ou 3,
q est égal à 1, 2 ou 3,
X représente un groupe nitro ou un groupe acide sulfonique ou un groupe sulfonate alcalin,
sous réserve que l'acide 3,5-dinitrobenzoïque, les 3,5-dinitrobenzoates d'alkyle en C₂-C₁₂, l'acide 3,4-dinitrobenzoïque, le 3,4-dinitrobenzoate de méthyle, le 3,5-dinitrobenzamide, le 3,5-dinitroberzodiéthylamide et le 3,4-dinitrobenzamide sont exclus,
à des températures allant du point de fusion du sulfure de polyarylène jusqu'à 450°C.

2. Produits de réaction selon revendication 1, caractérisés en ce que l'on met en oeuvre en tant que composés de formules VI et/ou VIII, des composés pour lesquels X représente un groupe acide sulfonique.

3. Produits de réaction selon revendication 1, caractérisés en ce que l'on met en oeuvre en tant que composés de formules VI et/ou VIII des composés pour lesquels X représente un groupe nitro.

4. Utilisation des produits de la revendication 1 pour la préparation d'un mélange de sulfures de polyarylène.

5. Utilisation des produits de la revendication 1 pour la fabrication d'objets moulés.

6. Mélanges des produits de réaction de la revendication 1 avec des matières de charge et matières de charge renforçantes usuelles, caractérisés en ce que 2 % en poids au moins des matières de charge appartiennent au groupe des matières de charge basiques : CaO, CaCO₃, MgCO₃, Li₂CO₃, Na₂CO₃, K₂CO₃ ou dolomie.

7. Utilisation des produits de réaction de la revendication 1 en tant que composants de combinaisons avec d'autres matières thermoplastiques.
